# FASCICULE DE BREVET EUROPEEN

(11) **EP 1 598 993 B1**
(45) Date de publication et mention de la délivrance du brevet: **26.03.2008**
(21) Numéro de dépôt: 05103238.1
(22) Date de dépôt: 21.04.2005
(51) Int. Cl.: H04L 12/56, H04L 12/28

(54) **Dispositif de gestion d'un protocole de mobilité pour un équipement d'un réseau de communications IP, en vue d'une continuité de service**
Verwaltungsvorrichtung eines Mobilitätsprotokolls für ein Gerät in einem IP Netzwerk zur ununterbrochenen Dienstleistung
Mobility protocol management apparatus for a IP communications network device to ensure continuity of service

(30) Priorité: 17.05.2004 FR 0450951
(43) Date de publication de la demande: 23.11.2005
(73) Titulaire: Alcatel Lucent, 75008 Paris (FR)
(72) Inventeur: ROMBEAUT, Jean-Pierre, 59600, MAUBEUGE (FR); GIRAUD, Alain, 91430, IGNY (FR)
(74) Mandataire: Korakis-Ménager, Sophie

(56) Documents cités:
- WO-A-02/47329
- US-A1- 2002 021 689
- US-B1- 6 195 705
- US-B1- 6 687 217

## Description

L'invention concerne le domaine des réseaux de communications à protocole Internet (IP), et plus particulièrement la gestion de la mobilité au sein de tels réseaux IP.

Comme le sait l'homme de l'art, un réseau IP peut être considéré comme une fédération de sous-ensembles de réseaux IP (ou sous-réseaux IP) raccordés les uns aux autres au moyen d'équipements d'accès formant des noeuds, tels que des routeurs d'accès.

Chaque équipement de communication qui se raccorde à un réseau IP dispose d'une adresse IP native (ou « home address ») qui correspond au préfixe du sous-réseau natif (ou « home subnet ») auquel il est habituellement connecté. Ainsi, lorsque l'équipement est connecté à son sous-réseau natif, les paquets de données (ou datagrammes) dont il est le destinataire sont directement adressés à son adresse native au moyen d'un protocole de routage classique de type « saut par saut » (ou « hop by hop »).

Or, de nombreux équipements de communication, appelés « noeuds mobiles » (ou « mobile node »), peuvent être déplacés et connectés à d'autres sous-réseaux, dits distants ou étrangers (ou « foreign subnets »), que leur propre sous-réseau natif. C'est notamment le cas de certains téléphones mobiles ou cellulaires, de certains assistants personnels numériques (ou PDA), et de certains ordinateurs portables (ou « laptops »). Pour permettre une telle connexion, un noeud mobile doit disposer d'une ou plusieurs adresses complémentaires, appelées « care-of addresses », qu'il obtient auprès du réseau IP par exemple au moyen d'un mécanisme IPv6 conventionnel, tel qu'une auto-configuration avec ou sans état (ou « stateless or stateful »).

L'adresse native doit être associée à chaque adresse complémentaire lors d'une procédure d'enregistrement de lien (ou « binding update ») effectuée entre le noeud mobile et un routeur de son réseau natif qui constitue son agent natif (ou « home agent »).

La gestion du passage d'un noeud mobile d'un sous-réseau à un autre, voire même d'un réseau IP à un autre réseau IP, c'est-à-dire la gestion de la mobilité inter-réseaux, s'effectue au moyen d'un protocole de mobilité, comme par exemple le protocole IP Mobility qui permet en particulier de ne pas être obligé de reconfigurer le noeud mobile pour qu'il s'adapte à un (sous-)réseau distant. Ce protocole de mobilité utilise les résultats fournis par les protocoles de routage pour transmettre (ou « forward ») des paquets de données, comme si il n'y avait pas de mobilité. Afin de pouvoir gérer localement la mobilité, chaque noeud mobile, tout comme chaque routeur d'agent natif, ainsi qu'éventuellement chaque noeud dit « appelant » (ou « correspondent node» tentant de joindre un noeud mobile, doit être équipé d'un dispositif de gestion du protocole de mobilité IP.

Afin de permettre aux réseaux IP d'assurer une continuité de service en cas de maintenance ou de défaillance matérielle ou logicielle d'un élément d'un équipement (routeur IP et/ou noeud mobile et/ou un noeud appelant), il a été proposé de doter au moins les routeurs IP de capacités logicielles et/ou matérielles redondantes et/ou parallèles. En d'autres termes, certains routeurs sont équipés d'un dispositif de gestion comportant des premiers et seconds moyens de gestion de protocole de mobilité, l'un étant dans un état activé lorsque l'autre est dans un état de veille. En cas de problème avec les moyens de gestion activés on désactive ces derniers et on active les moyens de gestion qui étaient précédemment en veille.

Mais, cette opération de changement de moyens de gestion nécessite la transmission aux moyens de gestion nouvellement activés de l'ensemble des données utiles à la mobilité IP, ce qui n'est pas toujours possible en présence d'un problème logiciel ou matériel, et/ou nécessite un certain temps pouvant entraîner une perte de connexion.

WO 02/47329 décrit un routeur redondant pour un protocole BGP, RIP, OSPF ou IS-IS. US 2002 021689 A1 décrit un équipement selon le préambule de la revendication 1.]

US 6 195 705 décrit un procédé pour remplacer automatiquement un Home Agent. Ce procédé implique un délai de 3 à 10, secondes au moins.

L'invention a donc pour but d'améliorer la situation, et notamment de permettre une continuité de service en présence d'une mobilité de haut niveau (ou hautement disponible), en particulier dans les réseaux de type IPv4 et IPv6, compatible avec les spécifications en cours de ces réseaux IP

Elle propose à cet effet un équipement d'un réseau IP/ tel qu'un routeur d'agent natif ou un équipement de communication, tel qu'un noeud mobile ou un noeud appelant, selon la revendication 1.

Ce dispositif de gestion se caractérise par le fait qu'il comprend des premiers et seconds moyens de gestion sensiblement identiques, couplés entre eux, et capables chacun de faire fonctionner le coeur d'un protocole de mobilité implanté dans l'équipement, en fonction de données courantes relatives à (ou utilisées dans le cadre de) la mobilité. Les premiers moyens de gestion peuvent être placés dans un état actif, respectivement un état de veille, lorsque les seconds moyens de gestion sont dans un état de veille, respectivement un état actif. Par ailleurs, les premiers et seconds moyens de gestion sont agencés pour se transmettre certaines au moins des données courantes de sorte qu'en cas de besoin ceux placés dans l'état de veille soient placés dans l'état actif pour se substituer à ceux activés et faire fonctionner le coeur du protocole de mobilité.

On entend ici par « coeur de protocole » l'ensemble des données et états liés à la mobilité.

Le dispositif de gestion selon l'invention peut comporter d'autres caractéristiques complémentaires qui peuvent être prises séparément ou en combinaison, et notamment :
- des moyens de supervision chargés d'observer les premiers et seconds moyens de gestion afin qu'en cas de détection d'un problème de fonctionnement au niveau des moyens de gestion placés dans l'état actif, les autres moyens de gestion, précédemment placés dans l'état de veille, soient placés dans l'état actif,
- ses premiers et seconds moyens de gestion peuvent être agencés de manière à se transmettre toutes les données courantes. Dans ce cas, il est préférable que les moyens de gestion placés dans l'état de veille soient chargés de demander aux moyens de gestion placés dans l'état actif de leur transmettre toutes les données courantes,
- ses moyens de gestion placés dans l'état actif peuvent être agencés de manière à analyser la validité de données courantes venant d'être modifiées et à transmettre aux moyens de gestion placés dans l'état de veille les données courantes modifiées et valides,
- les données courantes transmises sont choisies parmi au moins des données de configuration de mobilité IP initiales et/ou mises à jour, des structures de données globales du coeur du protocole de mobilité, des données de table(s) de l'agent natif associé à l'équipement (lorsqu'il s'agit d'un noeud mobile) et à un sous-réseau natif, des données d'éléments de mémoire cache de lien (« ou binding ») de l'agent natif associé à l'équipement (lorsqu'il s'agit d'un noeud mobile) et d'un équipement de type noeud appelant échangeant des paquets de données avec le noeud mobile, des données d'éléments de mémoire cache d'agents natifs voisins de l'agent natif associé à l'équipement (lorsqu'il s'agit d'un noeud mobile), des données d'information sur des sous-réseaux distants du réseau IP, et des données temporelles représentatives d'états de temporisations,
- ses premiers et seconds moyens de gestion peuvent soit partager des ressources matérielles de communication sensiblement identiques, soit utiliser des ressources matérielles de communication différentes.

L'invention propose également un équipement, pour un réseau IP, équipé d'un dispositif d'action du type de celui présenté ci-avant. Un tel équipement peut par exemple constituer un routeur d'agent natif associé à un sous-réseau natif du réseau IP, ou un noeud mobile associé à un routeur d'agent natif, ou encore un noeud appelant.

L'invention est particulièrement bien adaptée, bien que de façon non exclusive, à la mobilité dans les réseaux de type IPv4, défini notamment par les RFCs (« Request For Comments ») 2002 et 3344 de l'IETF (« Internet Engineering Task Force »), et de type IPv6, défini notamment aux adresses intemet de l'IETF « http://www.ietf.org/intemet-drafts/draft-ietf-mobileip-ipv6-24.txt» et « http://www.ietf.org/internet-drafts/draft-ietf-mobileip-mipv6-ha-ipsec-06.txt», ainsi que dans les groupes de travail (ou « Working Groups ») de l'IETF « Mobility for IPv6 » et « Mobility for IPv4 ».

D'autres caractéristiques et avantages de l'invention apparaîtront à l'examen de la description détaillée ci-après, et des dessins annexés, sur lesquels :
- la figure 1 illustre de façon schématique un exemple d'une partie d'un réseau IP, et
- la figure 2 illustre de façon schématique un exemple de réalisation d'un dispositif de gestion selon l'invention, implanté dans un noeud mobile.

Les dessins annexés pourront non seulement servir à compléter l'invention, mais aussi contribuer à sa définition, le cas échéant.

L'invention a pour objet de permettre la continuité de service en présence d'une mobilité IP au sein de réseaux de communications à protocole Internet (ou IP), et notamment dans les réseaux de type IPv4 et IPv6.

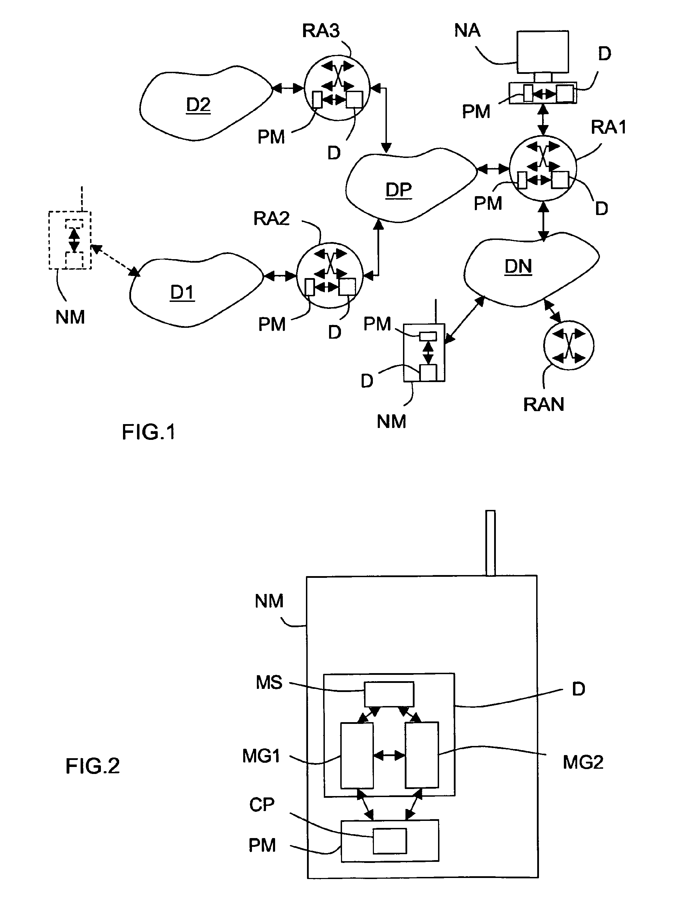

Comme cela est schématiquement illustré sur la figure 1, un réseau IP peut être considéré comme une fédération de sous-ensembles de réseaux IP (ou sous-réseaux IP) DP, DN, D1, D2.

Dans l'exemple illustré, le sous-réseau DP constitue en quelque sorte un sous-réseau principal du réseau IP auquel les autres sous-réseaux DN, D1 et D2 sont raccordés.

Le sous-réseau DN constitue le sous-réseau natif (ou « home subnet ») d'au moins un équipement de communication mobile NM de type « host », également appelé noeud mobile (ou « mobile node »), comme par exemple un téléphone mobile ou cellulaire, un assistant personnel numérique (ou PDA), ou un ordinateur portable (ou « laptop »), ou encore un routeur.

On entend ici par « sous-réseau natif » le sous-réseau auquel est habituellement connecté un noeud mobile NM, c'est-à-dire celui auprès duquel il dispose d'une adresse IP native (ou « home address ») qui correspond à son préfixe.

Chaque noeud mobile NM est associé à un routeur d'accès RAN de son sous-réseau natif DN, qui constitue son agent natif (ou « home agent »). L'adresse IP native du noeud mobile NM est ainsi enregistrée auprès du routeur d'accès RAN. D'une manière générale, le routeur d'accès RAN stocke toutes les informations de position (et localisation) du noeud mobile NM qui lui est associé, c'est-à-dire les données de mobilité qui le concernent, et sert de lieu de transit des datagrammes qui doivent lui être transmis, lorsqu'il est connecté à un sous-réseau IP D1 ou D2, dit sous-réseau distant (ou « foreign subnet »), différent de son sous-réseau natif DN.

Sur la figure 1 se trouve également représenté un équipement de communication de type noeud appelant NA (ou « correspondent node ») matérialisant un noeud connecté au sous-réseau natif DN et souhaitant transmettre des paquets de données (ou datagrammes) au noeud mobile NM, qu'il soit connecté audit sous-réseau natif DN ou à un sous-réseau distant (ou étranger) D1 ou D2.

Afin d'assurer la mobilité, selon le sens défini dans la partie d'introduction, les routeurs d'accès RAN, les noeuds mobiles NM, et les noeuds appelants NA sont pourvus, comme illustré schématiquement sur la figure 2, d'un protocole de mobilité PM, comme par exemple les protocoles IPv4 Mobility et IPv6 Mobility, qui utilisent les résultats fournis par les protocoles de routage du réseau. Ce protocole de mobilité PM est chargé de permettre à un noeud mobile NM de se connecter au réseau IP, via ses réseaux distants D1, D2. Il permet notamment à un noeud mobile NM connecté à un sous-réseau distant, par exemple D1, comme cela est matérialisé en pointillés sur la figure 1, d'obtenir auprès du réseau IP, par exemple au moyen d'un mécanisme IPv6 conventionnel, tel qu'une auto-configuration avec ou sans état (ou « stateless or stateful »), au moins une adresse IP complémentaire (ou « care-of address »). Cette adresse IP complémentaire est une adresse de routage de type « unicast ». Un noeud mobile NM peut disposer de plusieurs adresses IP complémentaires lorsqu'il est susceptible de se connecter à plusieurs sous-réseaux distants D1, D2 possédant des préfixes différents.

Lorsqu'un noeud mobile NM est effectivement connecté à l'un des sous-réseaux distants, par exemple D1, il doit prévenir son agent natif RAN afin qu'il enregistre l'adresse IP complémentaire qui lui a été attribuée par le sous-réseau distant D1. Cette adresse est alors appelée adresse IP complémentaire principale. C'est grâce à cette adresse IP complémentaire principale qu'un agent natif RAN va pouvoir transmettre à un noeud mobile NM, qui lui est associé, les paquets de données qu'un noeud appelant NA lui a transmis à son adresse IP native.

Le protocole de mobilité PM est chargé de permettre au noeud mobile NM de prévenir son agent natif RAN, via une procédure de lien (ou « binding update»). Cette procédure de lien est destinée à permettre à un agent natif RAN d'associer, au sein d'un couple de données de mobilité, une adresse IP native à une adresse IP complémentaire principale. Ainsi, tout paquet adressé à l'adresse IP native d'un noeud mobile NM, momentanément connecté à un sous-réseau distant D1, est intercepté par son agent natif RAN, puis transmis, via un tunnel, audit noeud mobile NM à l'adresse IP complémentaire principale qui est associée à son adresse IP native dans un couple stocké.

Afin de permettre une continuité de service, en présence d'une mobilitéIP, l'invention propose d'équiper les routeurs d'accès RAN et les noeuds mobiles NM, ainsi que de préférence les noeuds appelants NA, d'un dispositif D chargé de gérer le protocole de mobilité PM.

Plus précisément, ce dispositif de gestion D comprend, comme illustré sur la figure 2, au moins des premier MG1 et second MG2 modules de gestion sensiblement identiques et couplés l'un à l'autre. Ces premier MG1 et second MG2 modules de gestion, sont chacun capables de faire fonctionner le coeur CP du protocole de mobilité PM en fonction de données courantes relatives à la mobilité.

On entend ici par « coeur de protocole » l'ensemble des données et états liés à la mobilité.

Les premier MG1 et second MG2 modules de gestion peuvent soit partager sensiblement les mêmes ressources matérielles de communication, soit utiliser des ressources matérielles de communication différentes.

Les modes de réalisation des premier MG1 et second MG2 modules de gestion varient selon qu'ils sont implantés dans un agent natif AN, un noeud mobile NM ou un noeud appelant NA.

Par exemple, dans le cas d'un agent natif AN, chaque module de gestion MG1, MG2 est tout d'abord chargé de collecter les informations relatives aux agents natifs voisins se trouvant au sein de son propre réseau natif (comme par exemple la mémoire cache d'un voisin (ou « Neighbor cache ») dans le cas du protocole IPv6). Il est par ailleurs chargé de connaître l'ensemble des routeurs pouvant assurer la fonction d'agent natif dans son réseau natif DN et de les faire connaître à chaque noeud mobile NM qui lui est attaché. Il doit également gérer la réception des messages de type « binding update » et leur traitement. Il doit enfin servir de « proxy » pour l'ensemble des paquets qui lui sont parvenus et qui sont adressés à l'adresse native d'un noeud mobile NM qui lui est attaché. L'ensemble de ces données est transmis au module de gestion actif, mais il doit également être transmis au module de gestion en veille, comme on le verra plus loin.

On entend ici par « données courantes relatives à la mobilité» des données utilisées dans le cadre de la mobilité IP, c'est-à-dire des données de mobilité, des données de temporisateurs, des données de sécurité et des données de configuration d'interface, et plus précisément et notamment :
- des données de configuration de mobilité IP initiales et/ou mises à jour (ou « initial/updated IP mobility configuration data »), telles que les données de type « Security Association »,
- des structures de données globales du coeur CP du protocole de mobilité PM (ou « global IP mobility engine data structures »), telles que des données relatives aux interfaces,
- des données de table(s) de l'agent natif RAN associé à un noeud mobile NM et à son sous-réseau natif DN (ou « home agent table elements »),
- des données d'éléments de mémoire cache de lien (« ou binding cache elements ») de l'agent natif RAN, associé au noeud mobile NM, et du noeud appelant NA,
- des données d'éléments de mémoire cache (ou « neighbor cache elements ») des agents natifs voisins de l'agent natif AN associé au noeud mobile NM,
- des données d'information sur des sous-réseaux distants D1, D2 du réseau IP (ou « foreign network information »), telles que des adresses IP complémentaires, et
- des données temporelles représentatives d'états de temporisateurs (ou « timers »), telles que des données de temporisateurs de retransmission de mise à jour de lien (ou « binding update retransmission timer »).

Le premier module de gestion MG1 comme le second module de gestion MG2 peut être placé soit dans un état actif, soit dans un état de veille. Cependant, lorsque l'un des premier et second modules de gestion est dans l'état actif, l'autre est dans l'état de veille.

On entend ici par « état actif » un état dans lequel le module de gestion MG1 ou MG2 reçoit des données et transmet des données. Par ailleurs, on entend par « état de veille » un état dans lequel le module de gestion MG1 ou MG2 ne reçoit pas de données de l'extérieur et ne peut pas transmettre de données (même les temporisateurs ne sont pas enclenchés). On peut noter que l'on peut définir un état intermédiaire « semi-actif » dans lequel le module de gestion MG1 ou MG2 reçoit des données mais ne peut pas transmettre de données (il peut cependant utiliser en interne les données reçues). En d'autres termes l'état semi-actif est un état actif sans émission de sortie. On considère donc ici que l'état semi-actif est une variante de l'état de veille sur le plan des émissions de sortie.

Le dispositif de gestion D comporte préférentiellement un module de supervision MS couplé aux premier MG1 et second MG2 modules de gestion afin d'observer leurs fonctionnements, et notamment le fonctionnement de celui qui est placé dans l'état actif. Ainsi, en cas de détection d'un problème de fonctionnement, logiciel et/ou matériel, au niveau du module de gestion MG1 (ou MG2) placé dans l'état actif, le module de supervision MS place dans l'état de veille ledit module de gestion MG1 (ou MG2) et dans l'état actif l'autre module de gestion MG2 (ou MG1), jusqu'alors placé dans l'état de veille.

Il est important de noter qu'un problème détecté ne concerne pas forcément le module de gestion actif, il peut également concerner les ressources matérielles de communication utilisées par ledit module de gestion actif. Un problème peut également concerner le module de gestion en veille. Dans ce dernier cas, cela peut permettre au module de supervision MS de décider de détruire un traitement (ou « process ») en cours pour en redémarrer un autre.

Dès qu'un module de gestion MG1 (ou MG2) passe de l'état de veille à l'état actif, il se substitue immédiatement à l'autre module de gestion MG2 (ou MG1) afin de faire fonctionner de façon continue le coeur CP du protocole de mobilité PM (c'est-à-dire de poursuivre le « process » en cours), assurant ainsi la continuité de service recherchée. On peut noter que le module de gestion qui était précédemment actif ne passe pas de façon systématique dans un état de veille. En fait, il n'existe plus au regard du traitement (ou process) en cours, désormais géré par l'autre module de gestion (il est donc en veille par rapport à un traitement (ou process) en cours).

Cela résulte du fait que, selon l'invention, les premier MG1 et second MG2 modules de gestion sont agencés de manière à se transmettre certaines au moins des données courantes présentées ci-avant.

Au moins deux modes de transmission de données courantes peuvent être envisagés.

Un premier mode consiste à ce que le module de gestion placé dans l'état actif transmette au module de gestion placé dans l'état de veille toutes les données courantes présentées ci-avant. Cette transmission peut se faire soit systématiquement à l'initiative du module de gestion placé dans l'état actif, soit à la demande du module de gestion placé dans l'état de veille.

Un second mode consiste à ce que le module de gestion placé dans l'état actif transmette une seule fois au module de gestion placé dans l'état de veille toutes les données courantes présentées ci-avant, puis qu'il ne transmette ensuite que les données courantes venant d'être modifiés.

La première transmission (de toutes les données courantes) peut se faire à l'initiative du module de gestion placé dans l'état actif ou bien, et de préférence, à la demande du module de gestion placé dans l'état de veille. Lorsque le module de gestion placé dans l'état de veille a reçu toutes les données courantes, il suspend la création de ses ressources de communication en attendant de recevoir une instruction de changement d'état, par exemple du module de supervision MS.

Les transmissions partielles suivantes (des seules données courantes modifiées) peuvent se faire à la demande du module de gestion placé dans l'état de veille ou bien, et de préférence, systématiquement à l'initiative du module de gestion placé dans l'état actif.

Il est préférable que le module de gestion qui est placé dans l'état actif analyse la validité des données courantes qui viennent d'être modifiées avant de les transmettre au module de gestion placé dans l'état de veille, de sorte que ce dernier dispose en permanence de données courantes valides, particulièrement utiles pour assurer la continuité de service lorsqu'il reçoit une instruction de changement d'état, par exemple du module de supervision MS. Ce type de transmission partielle permet une mise à jour de type « incrémental » du module de gestion placé dans l'état de veille.

Préférentiellement, lorsque le module de gestion placé dans l'état actif est averti que l'autre module de gestion est placé dans l'état de veille, il le synchronise en lui transmettant toutes les données courantes utiles à la mobilité, puis il continue de fonctionner de façon classique en transmettant ses données courantes, totalement ou partiellement, à l'autre module de gestion placé dans l'état de veille.

On obtient ainsi une continuité de service, en présence d'une mobilité IP de haut niveau, et de ce fait compatible avec les spécifications en cours du réseau IP.

Le dispositif de gestion D selon l'invention, et notamment ses modules de gestion MG1 et MG2 et son module de supervision MS, peuvent être réalisés sous la forme de circuits électroniques, de modules logiciels (ou informatiques), ou d'une combinaison de circuits et de logiciels.

L'invention ne se limite pas aux modes de réalisation de dispositif de gestion, de noeud mobile, de noeud appelant et de routeur d'accès décrits ci-avant, seulement à titre d'exemple, mais elle englobe toutes les variantes que pourra envisager l'homme de l'art dans le cadre des revendications ci-après.

## Revendications

1. Equipement de réseau (RAN, NM, NA) pour un réseau de communications à protocole Internet (IP), ledit équipement comprenant un coeur (CP) d'un protocole de mobilité IP (PM) et un dispositif de gestion (D) dudit protocole de mobilité, ledit dispositif de gestion (D) comprenant des premiers moyens de gestion (MG1) agencés pour faire fonctionner ledit coeur de protocole de mobilité IP (PM) implanté dans ledit équipement en fonction de données courantes relatives à la mobilité IP, lesdits premiers moyens de gestion étant aptes à être placés dans un état actif ou dans un état de veille, **caractérisé en ce que** ledit dispositif de gestion comprend en outre des seconds moyens de gestion (MG2) sensiblement identiques auxdits premiers moyens de gestion (MG1) et couplés à ces derniers, lesdits premiers moyens de gestion (MG1) étant agencés pour être placés dans un état actif, respectivement un état de veille, lorsque lesdits seconds moyens de gestion (MG2) sont placés dans un état de veille, respectivement un état actif, et lesdits premiers (MG1) et seconds (MG2) moyens de gestion étant agencés pour se transmettre certaines au moins desdites données courantes relatives à la mobilité IP, de sorte qu'en cas de besoin ceux placés dans l'état de veille se substituent à ceux placés dans l'état actif pour faire fonctionner ledit coeur (CP) du protocole de mobilité (PM).

2. Equipement de réseau selon la revendication 1, **caractérisé en ce qu'**il comprend des moyens de supervision (MS) agencés pour observer lesdits premiers (MG1) et seconds (MG2) moyens de gestion afin, en cas de détection d'un problème de fonctionnement sur les moyens de gestion (MG1 ou MG2) placés dans l'état actif, de placer dans l'état actif les autres moyens de gestion précédemment placés dans l'état de veille.

3. Equipement de réseau selon l'une des revendications 1 et 2, **caractérisé en ce que** lesdits premiers (MG1) et seconds (MG2) moyens de gestion sont agencés pour se transmettre toutes lesdites données courantes.

4. Equipement de réseau selon la revendication 3, **caractérisé en ce que** les moyens de gestion (MG1 ou MG2) placés dans l'état de veille sont agencés pour demander aux moyens de gestion placés dans l'état actif (MG2 ou MG1) de leur transmettre toutes lesdites données courantes.

5. Equipement de réseau selon l'une des revendications 1 à 4, **caractérisé en ce que** les moyens de gestion placés dans l'état actif (MG1 ou MG2) sont agencés pour analyser la validité de données courantes venant d'être modifiées et pour transmettre aux moyens de gestion (MG2 ou MG1) placés dans l'état de veille les données courantes modifiées et valides.

6. Equipement de réseau selon l'une des revendications 1 à 5, **caractérisé en ce que** lesdites données courantes transmises sont comprises dans un groupe comprenant au moins des données de configuration de mobilité IP initiales et/ou mises à jour, des structures de données globales du coeur (CP) du protocole de mobilité (PM), des données de table(s) d'un agent natif (RAN) associé à un équipement de réseau de type noeud mobile (NM) et à un sous-réseau natif (DN) dudit réseau IP, des données d'éléments de mémoire cache de liaison de l'agent natif (RAN) associé à un équipement de réseau de type noeud mobile (NM) et à un sous-réseau natif (DN) et d'un équipement de réseau de type noeud appelant (NA) échangeant des paquets de données avec ledit noeud mobile (NM), des données d'éléments de mémoire cache d'agents natifs voisins d'un agent natif (RAN) associé à un équipement de réseau de type noeud mobile (NM), des données d'information sur des sous-réseaux distants (D1, D2) dudit réseau IP, et des données temporelles représentatives d'états de temporisateurs.

7. Equipement de réseau selon l'une des revendications 1 à 6, **caractérisé en ce que** lesdits premiers (MG1) et seconds (MG2) moyens de gestion partagent des ressources matérielles de communication sensiblement identiques.

8. Equipement de réseau selon l'une des revendications 1 à 6, **caractérisé en ce que** lesdits premiers (MG1) et seconds (MG2) moyens de gestion utilisent des ressources matérielles de communication différentes.

9. Equipement de réseau selon la revendication 1, **caractérisé en ce qu'**il est choisi dans un groupe comprenant un routeur d'agent natif (RAN) associé à un sous-réseau natif (DN) dudit réseau IP, un noeud mobile (NM) associé à un routeur d'agent natif (RAN), et un noeud appelant (NA).

## Claims

1. Network equipment (RAN, NM, NA) for an Internet protocol communication network, said equipment comprising a core (CP) of an IP mobility protocol (PM) and an apparatus (D) for managing said mobility protocol, said management apparatus (D) comprising first management means (MG1) adapted to operate said core of an IP mobility protocol (PM) installed in said equipment as a function of current data relating to IP mobility, said first management means being adapted to assume an active state or a standby state, **characterised in that** said management apparatus further comprises second management (MG2) means which are substantially identical to and coupled to said first management means (MG1), said first management means (MG1) being adapted to assume an active state, respectively a standby state, when said second management means (MG2) assume a standby state, respectively an active state, and said first (MG1) and second (MG2) management means being adapted to send each other at least some of said current data relating to IP mobility so that the means in the standby state are substituted for the means in the active state, if required, to operate the mobility protocol (PM) core (CP).

2. Network equipment according to claim 1, **characterised in that** it comprises supervision means (MS) adapted to observe said first (MG1) and second (MG2) management means in order to place in the active state the other management means previously placed in the standby state in the event of detection of a problem in the operation of the management means (MG1 or MG2) in the active state.

3. Network equipment according to claim 1 or claim 2, **characterised in that** the first (MG1) and second (MG2) management means are adapted to send each other all said current data.

4. Network equipment according to claim 3 , **characterised in that** the management means (MG1 or MG2) in the standby state are adapted to request the management means (MG2 or MG1) in the active state to send them all said current data.

5. Network equipment according to any of claims 1 to 4, **characterised in that** the management means (MG1 or MG2) in the active state are adapted to analyse the validity of current data that has just been modified and to send valid modified current data to the management means (MG2 or MG1) in the standby state.

6. Network equipment according to any of claims 1 to 5, **characterised in that** said current data that is sent is included in a group comprising at least initial and/or updated IP mobility configuration data, mobility protocol (PM) core (CP) global data structures, data from table(s) of a native agent (RAN) associated with a mobile node (NM) network equipment and with a native subnetwork (DN) of said IP network, data of link cache memory elements of the native agent (RAN) associated with a mobile node (NM) network equipment and with a native subnetwork (DN) and of a calling node network equipment (NA) exchanging data packets with said mobile node (NM), data of cache memory elements of neighbour native agents of a native agent (RAN) associated with a mobile node (NM) network equipment, data constituting information on distant subnetworks (D1, D2) of said IP network, and time data representative of timer states.

7. Network equipment according to any of claims 1 to 6, **characterised in that** said first (MG1) and second (MG2) management means share substantially identical communication hardware resources.

8. Network equipment according to any of claims 1 to 6, **characterised in that** said first (MG1) and second (MG2) management means use different communication hardware resources.

9. Network equipment according to claim 1, **characterised in that** it is selected from a group comprising a native agent router (RAN) associated with a native subnetwork (DN) of said IP network, a mobile node (NM) associated with a native agent router (RAN), and a calling node (NA).

## Patentansprüche

1. Netzwerkgerät (RAN, NM, NA) für ein Kommunikationsnetz mit Internet-Protokoll (IP), wobei dieses Gerät einen Kern (CP) eines Mobilitätsprotokolls IP (PM) und eine Vorrichtung zur Verwaltung (D) dieses Mobilitätsprotokolls einschließt, und wobei diese Verwaltungsvorrichtung (D) erste Verwaltungsmittel (MG1) einschließt, die so aufgebaut sind, dass sie diesen Kern des Mobilitätsprotokolls IP (PM), der in diesem Gerät angesiedelt ist, abhängig von aktuellen Daten, welche sich auf die Mobilität beziehen, betreiben, wobei diese ersten Verwaltungsmittel in einen aktiven oder in einen Stand-by-Zustand gesetzt werden können, **dadurch gekennzeichnet, dass** diese Verwaltungsvorrichtung außerdem zweite Verwaltungsmittel (MG2) einschließt, die etwa identisch sind mit diesen ersten Verwaltungsmitteln (MG1) und an letztere gekoppelt sind, wobei diese ersten Verwaltungsmittel (MG1) so aufgebaut sind, dass sie in einen aktiven Zustand gesetzt werden beziehungsweise in einen Stand-by-Zustand, wenn diese zweiten Verwaltungsmittel (MG2) in einen Stand-by-Zustand beziehungsweise einen aktiven Zustand gesetzt sind, und diese ersten (MG1) und zweiten (MG2) Verwaltungsmittel so aufgebaut sind, dass sie einander zumindest einige dieser aktuellen Daten übermitteln, die sich auf die Mobilität IP beziehen, so dass im Bedarfsfall diejenigen, die im Stand-by-Zustand sind, an die Stelle derjenigen treten, die im aktiven Zustand sind, um diesen Kern (CP) des Mobilitätsprotokolls (PM) zu betreiben.

2. Netzwerkgerät gemäß Anspruch 1, **dadurch gekennzeichnet, dass** es Mittel zur Überwachung (MS) einschließt, die die Aufgabe haben, diese ersten (MG1) und diese zweiten (MG2) Verwaltungsmittel zu beobachten, damit im Falle der Erfassung eines Funktionsproblems an den in den aktiven Zustand versetzten Verwaltungsmitteln (MG1 oder MG2) die anderen zuvor in den Stand-by-Zustand versetzten Verwaltungsmittel in den aktiven Zustand versetzt werden.

3. Netzwerkgerät gemäß einem der Ansprüche 1 oder 2, **dadurch gekennzeichnet, dass** diese ersten (MG1)und zweiten (MG2) Verwaltungsmittel so aufgebaut sind, dass sie einander alle diese aktuellen Daten übermitteln.

4. Netzwerkgerät gemäß Anspruch 3, **dadurch gekennzeichnet, dass** die in den Stand-by-Zustand versetzten Verwaltungsmittel (MG oder MG2) so aufgebaut sind, dass sie bei den Verwaltungsmitteln, die in den aktiven Zustand gesetzt sind (MG2 oder MG1), anfordern, dass sie ihnen alle diese aktuellen Daten übermitteln.

5. Netzwerkgerät gemäß einem der Ansprüche 1 bis 4, **dadurch gekennzeichnet, dass** die Verwaltungsmittel, welche in den aktiven Zustand versetzt sind (MG oder MG2) so aufgebaut sind, dass sie die Gültigkeit von aktuellen Daten analysieren, die gerade abgeändert wurden, und dass sie an die Verwaltungsmittel (MG2 oder MG1), die im Stand-by-Zustand sind, die abgeänderten gültigen Daten übermitteln.

6. Netzwerkgerät gemäß einem der Ansprüche 1 bis 5, **dadurch gekennzeichnet, dass** diese übermittelten aktuellen Daten in eine Gruppe eingeschlossen sind, die mindestens folgendes enthält: ursprüngliche und/oder aktualisierte IP-Mobilitätskonfigurationsdaten, globale Datenstrukturen des Kerns (CP) des Mobilitätsprotokolls (PM), Tabellendaten eines nativen Agenten (RAN), der mit einem Netzwerkgerät des Typs mobiler Knoten (NM) und mit einem nativen Teilnetz (DN) dieses IP-Netzwerks verknüpft ist, Daten von Verbindungscachespeicherelementen des nativen Agenten (RAN), der mit einem Netzwerkgerät des Typs mobiler Knoten (NM) und einem nativen Teilnetz (DN) verknüpft ist, und von einem Netzwerkgerät des Typs anrufender Knoten (NA), der mit diesem mobilen Knoten (NM) Datenpakete, Daten von Nativ-Agent-Cachespeicherelementen, die mit einem nativen Agenten (RAN) benachbart sind, welcher mit einem Netzwerkgerät des Typs mobiler Knoten (NM) verknüpft ist, Informationsdaten zu den entfernten Teilnetzen (D1, D2) dieses IP-Netzwerks und Zeitdaten, die für Zeitschaltungsstatus stehen, austauscht.

7. Netzwerkgerät gemäß einem der Ansprüche 1 bis 6, **dadurch gekennzeichnet, dass** diese ersten (MG1) und zweiten (MG2) Verwaltungsmittel etwa identische materielle Kommunikationsressourcen gemeinsam benutzen.

8. Netzwerkgerät gemäß einem der Ansprüche 1 bis 6, **dadurch gekennzeichnet, dass** diese ersten (MG1) und zweiten (MG2) Verwaltungsmittel unterschiedliche materielle Kommunikationsressourcen verwenden.

9. Netzwerkgerät gemäß Anspruch 1, **dadurch gekennzeichnet, dass** es ausgewählt wird aus einer Gruppe, die folgendes einschließt: einen Nativ-Agent-Router (RAN), der mit einem nativen Teilnetz (DN) dieses IP-Netzwerks verknüpft ist, einen mobilen Knoten (NM), der mit einem Nativ-Agent-Router (RAN) verknüpft ist und einen anrufenden Knoten (NA).
